# EUROPÄISCHE PATENTANMELDUNG

(11) **EP 2 023 103 A1**
(43) Veröffentlichungstag der Anmeldung: **11.02.2009**
(21) Anmeldenummer: 08013948.8
(22) Anmeldetag: 04.08.2008
(51) Int. Cl.: G01J 3/32, G01J 3/36, G01N 21/35

(54) **Messeinrichtung und Verfahren zur spektroskopischen Untersuchung einer Probe**

(30) Priorität: 10.08.2007 DE 102007037863; 29.02.2008 DE 102008011792
(71) Anmelder: Bruins, Hans Joachim, 81247 München (DE)
(72) Erfinder: Bruins, Hans Joachim, 81247 München (DE)
(74) Vertreter: Hertz, Oliver

(57) **Zusammenfassung**

Eine Messeinrichtung (100) zur spektroskopischen Untersuchung einer Probe (1, 2), insbesondere einer partikulären Pflanzenprobe, einer zusammengesetzten Pflanzenprobe mit festen und flüssigen Bestandteilen oder einer flüssigen Pflanzenprobe, umfasst eine Beleuchtungseinrichtung (10), die zur spektral aufgelösten Beleuchtung der Probe eingerichtet ist, eine Probenhalterungseinrichtung (20), und eine Detektoreinrichtung (30) mit einem ersten Detektor (31), der für eine Transmissionsmessung vorgesehen ist, und mit einem zweiten Detektor (32), der für eine Reflektionsmessung vorgesehen ist, wobei die Beleuchtungseinrichtung (10) und die Detektoreinrichtung (30) so angeordnet sind, dass mit den ersten und zweiten Detektoren (31, 32) die Transmission und die Reflektion der Probe (1, 2) in einem gemeinsamen Messvorgang messbar sind. Es wird auch ein Verfahren zur spektroskopischen Untersuchung einer Probe (1, 2) beschrieben.

## Beschreibung

Die Erfindung betrifft eine Messeinrichtung zur spektroskopischen Untersuchung einer Probe, insbesondere einer partikulären Pflanzenprobe, einer zusammengesetzten Pflanzenprobe mit festen und flüssigen Bestandteilen oder einer flüssigen Pflanzenprobe, mit den Merkmalen des Oberbegriffs von Anspruch 1. Hauptanwendungen der Messeinrichtung bestehen bei der Untersuchung und Analyse von Pflanzenproben, insbesondere Kornproben von Getreide. Die Erfindung betrifft des Weiteren ein Verfahren zur spektroskopischen Untersuchung einer Probe mit den Merkmalen des unabhängigen Verfahrensanspruchs.

Es ist bekannt, für eine qualitative und/oder quantitative Untersuchung einer Probe spektroskopische Messungen zu durchzuführen. Zur spektroskopischen Messung wird die Probe spektral aufgelöst mit Licht vorbestimmter Wellenlängen beleuchtet und die spektrale Antwort der Probe (z. B. Reflektion, Transmission) mit einem Detektor erfasst. Die gemessenen Spektren liefern Informationen über das Vorhandensein und/oder den Anteil bestimmter Substanzen in der Probe.

Typischerweise wird ein Spektralphotometer als Messgerät für spektroskopische Messungen an einer Probe verwendet. Ein Spektralphotometer umfasst einen optischen Aufbau mit einer Lichtquelle, einem Monochromator, einer Probenhalterung und einem Detektor. Die konkrete Gestaltung dieses optischen Aufbaus wird in Abhängigkeit von der konkreten Messaufgabe gewählt. Beispielsweise befindet sich für eine Transmissionsmessung eine Probe in einer transparenten Probenhalterung, die in dem Lichtweg zwischen dem Austrittspalt des Monochromators und dem Detektor angeordnet ist. Für eine Reflektionsmessung hingegen wird häufig eine Integrationskugel (Ulbricht-Kugel) verwendet, die zur Beleuchtung einer Oberfläche der Probe und zur Sammlung des an der Oberfläche reflektierten Lichts vorgesehen ist. Aus der Praxis sind zahlreiche Spektralphotometer verschiedener Typen bekannt, die sich in ihrem optischen Aufbau unterscheiden.

Ein genereller Nachteil herkömmlicher Spektralphotometer besteht darin, dass der optische Aufbau entweder für eine Transmissionsmessung oder für eine Reflektionsmessung angepasst ist. Um an einer Probe die Transmission und die Reflektion zu messen, muss bei herkömmlichen Spektralphotometern mindestens eine der folgenden Maßnahmen vorgesehen sein. Erstens muss der optische Weg im Spektralphotometer verändert werden, um von der Transmissions- zur Reflektionsmessung umzuschalten (oder umgekehrt). Zweitens muss die Probenanordnung relativ zum optischen Aufbau, insbesondere relativ zum Detektor und ggf. der Integrationskugel verändert werden, um zwischen der Transmissions- und Reflektionsmessung umzuschalten.

Dieser Nachteil stellt nicht nur einen unerwünschten Aufwand bei der Bedienung eines herkömmlichen Spektralphotometers dar. Problematisch ist vor allem, dass die Reflektions- und Transmissionsmessungen unter verschiedenen optischen Bedingungen, insbesondere mit verschiedenen Beleuchtungsbedingungen und/oder an verschiedenen Probenbereichen, erfolgen. Dadurch ist die Vergleichbarkeit der Messergebnisse beschränkt. Dieser Nachteil wirkt sich besonders kritisch bei Messungen aus, die für ein zuverlässiges Ergebnis der Analyse eine hochempfindliche Detektion spektraler Merkmale erfordern, die in den Transmissions- oder Reflektionsspektren nur schwach ausgeprägt sind.

Spektroskopische Untersuchungen erfolgen auch an Pflanzenproben. Beispielsweise wird die Transmissionsmessung an Getreideproben in DE 101 19 763 und DE 102 17 838 beschrieben. Bei der spektroskopischen Untersuchung von Pflanzenproben sind die genannten Probleme aus dem folgenden Grund besonders ausgeprägt. Für eine zuverlässige Analyse einer Pflanzenprobe besteht häufig ein Interesse, spektrale Merkmale in einem ausgedehnten Spektralbereich, z. B. vom sichtbaren Bereich bis zum infraroten Spektralbereich zu messen. Die Erfahrung zeigt jedoch, dass häufig nicht der gesamte Spektralbereich sowohl für die Transmissions- als auch für die Reflektionsmessung zugänglich ist. Es kann also erforderlich sein, für eine Analyse insbesondere einer Pflanzenprobe eine Transmissionsmessung in einem ersten Spektralbereich mit einer Reflektionsmessung in einem zweiten Spektralbereich zu kombinieren. Hierzu sind bei Verwendung der herkömmlichen Spektralphotometer die genannten Umbauten erforderlich, durch die das Messergebnis verfälscht werden kann.

Die Aufgabe der Erfindung ist es, eine verbesserte Messeinrichtung für spektroskopische Untersuchungen bereitzustellen, mit der die Nachteile der herkömmlichen Techniken überwunden werden. Die Messeinrichtung soll insbesondere einen vereinfachten Messbetrieb und/oder die Erfassung von spektralen Eigenschaften der Probe mit erhöhter Zuverlässigkeit und Reproduzierbarkeit ermöglichen. Die Aufgabe der Erfindung ist es auch, ein verbessertes Messverfahren zur spektroskopischen Untersuchung einer Probe bereitzustellen, mit dem die Nachteile der herkömmlichen Techniken überwunden werden.

Diese Aufgaben werden durch eine Messeinrichtung und ein Messverfahren mit den Merkmalen der unabhängigen Ansprüche gelöst. Vorteilhafte Ausführungsformen und Anwendungen der Erfindung ergeben sich aus den abhängigen Ansprüchen.

Gemäß einem ersten Gesichtspunkt basiert die Erfindung auf der allgemeinen technischen Lehre, eine Messeinrichtung zur spektroskopischen Untersuchung mindestens einer Probe, insbesondere mindestens einer partikulären Pflanzenprobe, mindestens einer zusammengesetzten Pflanzenprobe mit festen und flüssigen Bestandteilen oder mindestens einer flüssigen Pflanzenprobe, bereitzustellen, bei der eine Beleuchtungseinrichtung zur spektral aufgelösten Beleuchtung und eine Detektoreinrichtung so angeordnet sind, dass mit ersten und zweiten Detektoren der Detektoreinrichtung die Transmission und Reflektion der Probe in einem gemeinsamen Messvorgang messbar sind.

Gemäß einem zweiten Gesichtspunkt basiert die Erfindung auf der allgemeinen technischen Lehre, ein Verfahren zur spektroskopischen Untersuchung einer Probe einer partikulären Pflanzenprobe, einer zusammengesetzten Pflanzenprobe mit festen und flüssigen Bestandteilen oder einer flüssigen Pflanzenprobe, bereitzustellen, bei dem eine spektral aufgelöste Beleuchtung der Probe mit einer Beleuchtungseinrichtung und eine Messung mit einer Transmissionsmessung und einer Reflektionsmessung vorgesehen sind, wobei die Transmission und die Reflektion der Probe mit getrennten Detektoren einer Detektoreinrichtung gemeinsam gemessen werden. Die Pflanzenprobe umfasst vorzugsweise eine partikuläre Pflanzenprobe, eine zusammengesetzte Pflanzenprobe mit festen und flüssigen Bestandteilen oder eine flüssige Pflanzenprobe, besonders bevorzugt eine Getreideprobe, insbesondere eine Kornprobe von Getreide (z. B. Gerste, Weizen, Mais, Hafer, Roggen), umfassend unbearbeitete Getreidekörner oder verarbeitetes, z. B. gemahlenes oder geschrotetes oder trockenextrahiertes Getreide. In Abhängigkeit von der Verarbeitung des Getreides kann die Probe insbesondere ein Feststoff-Flüssigkeits-Gemisch, z. B. eine Suspension, eine Paste, oder eine Flüssigkeit, z. B. ein flüssiges Extrakt, ein Perkolat oder ein Ferment umfassen. Die Probe kann fest, flüssig, fließfähig oder streichfest sein.

Erfindungsgemäß wird ein Strahlengang von der Beleuchtungseinrichtung zu den Detektoren in zwei Teil-Strahlengänge aufgespalten, auf denen einerseits transmittiertes Licht von der Probe zu dem ersten Detektor und andererseits reflektiertes Licht von der Probe zu dem zweiten Detektor geleitet wird. Dies ermöglicht, dass die Reflektion und Transmission ohne Umbau der Messeinrichtung und/oder ohne eine Veränderung der Probe in der Messeinrichtung gemessen werden können. Die Messung von Transmission und Reflektion in einem gemeinsamen Messvorgang bedeutet, dass die Reflektion und Transmission unterbrechungsfrei in einer einzigen Betriebsphase der Messeinrichtung, insbesondere einem einzigen Durchlauf durch den interessierenden Spektralbereich gemessen werden. Wenn die Beleuchtungseinrichtung eine Kombination aus einer Lichtquelle und einem Monochromator umfasst, können die Reflektion und Transmission in einem einzigen Wellenlängendurchlauf des Monochromators gemessen werden. Wenn die Beleuchtungseinrichtung alternativ eine spektral veränderliche Lichtquelle, wie z. B. eine Anordnung von durchstimmbaren Leuchtdioden umfasst, können die Reflektion und Transmission mit einem einzigen Durchstimmvorgang dieser Lichtquelle gemessen werden.

Somit wird vorteilhafterweise mit der Erfindung eine Messeinrichtung bereitgestellt, die beide Messaufgaben, nämlich die Reflektions- und Transmissionsmessungen erfüllt, ohne dass eine Veränderung am Strahlengang und/oder der Probenposition erforderlich sind. Die Messeinrichtung kann kompakt aufgebaut sein, die Reflektions- und Transmissionsmessungen können mit einem einzigen Gerät ausgeführt werden. Erfindungsgemäß werden die Reflektion und die Transmission simultan erfasst, d. h. vorzugsweise werden die Transmission und Reflektion gleichzeitig gemessen. Alternativ können zeitlich versetzte Messungen vorgesehen sein, bei denen bei einem Wellenlängendurchlauf des Monochromators z. B. in einem ersten Spektralbereich die Transmission und in einem zweiten Spektralbereich die Reflektion gemessen wird.

Gemäß einer vorteilhaften Ausführungsform der Erfindung ist es jedoch auch möglich, dass können die Transmission und Reflektion gleichzeitig in getrennten Spektralbereichen gemessen werden. Dies ermöglicht vorteilhafterweise, dass mit einer Messung vorbestimmte Inhaltstoffe qualitativ und/oder quantitativ erfasst werden können, deren spektrale Antwort in verschiedenen Spektralbereichen besonders ausgeprägt ist. Für Messungen insbesondere an Getreide kann eine Transmissionsmessung im Wellenbereich von 700 nm bis 1.100 nm und eine Reflektionsmessung im Wellenlängenbereich von 1.400 nm bis 2.500 nm von Vorteil sein.

Gemäß einer alternativen Ausführungsform der Erfindung können die Reflektion und Transmission in überlappenden oder gleichen Spektralbereichen gleichzeitig gemessen werden. So kann es für die Erfassung bestimmter Proteine in Pflanzenproben von Vorteil sein, die Transmission im Spektralbereich von 850 nm bis 1.100 nm und die Reflektion im Spektralbereich von 380 nm bis 1.200 nm zu messen.

Ein weiterer Vorteil der Erfindung besteht darin, dass verschiedene Möglichkeiten bestehen, die Reflektion und Transmission in einem gemeinsamen Messvorgang, insbesondere gleichzeitig zu messen. So kann gemäß einer ersten Ausführungsform der Erfindung die Beleuchtungseinrichtung, insbesondere der Monochromator, zwei Austrittsspalte aufweisen, die zur Bereitstellung von Licht in verschiedenen Spektralbereichen, z. B. gemäß verschiedenen Beugungsordnungen eines Gitters des Monochromators, angeordnet sind. Vorteilhafterweise können damit die Reflektion und Transmission in den verschiedenen Spektralbereichen gleichzeitig gemessen werden. Bei der ersten Ausführungsform der Erfindung ist die Aufspaltung des Strahlengangs in die Teil-Strahlengänge zwischen der Beleuchtungseinrichtung und einer Probenhalterungseinrichtung vorgesehen. In diesem Fall umfasst die Probenhalterungseinrichtung zwei Probenzellen, die zur Aufnahme von Teilproben eingerichtet sind. Die Bereitstellung von zwei Probenzellen kann von Vorteil sein, wenn die Reflektions- und Transmissionsmessungen an Teilproben in verschiedenen Zuständen erfolgen sollen. Beispielsweise kann in der ersten Probenzelle eine Transmissionsmessung an einer Ganzkornprobe von Getreide und an einer zweiten Probenzelle eine Reflektionsmessung an einer gemahlenen oder geschroteten Probe von Getreide vorgesehen sein. Alternativ können in den ersten und zweiten Probenzellen eine Probe und eine Referenzprobe enthalten sein, deren spektralen Reflektions- und Transmissions-Merkmale miteinander verglichen werden sollen.

Vorteilhafterweise können bei der Vermessung von Teilproben verschiedenartige Teilproben eines vorbestimmten, z. B. einheitlichen Ausgangsmaterials gleichzeitig vermessen werden. Es können Kombinationen aus partikulären Pflanzenproben, zusammengesetzte Pflanzenprobe mit festen und flüssigen Bestandteilen und/oder flüssigen Pflanzenproben gleichzeitig gemessen werden.

Gemäß einer zweiten Ausführungsform der Erfindung kann vorgesehen sein, dass die Beleuchtungseinrichtung, insbesondere der Monochromator, einen einzigen Austrittsspalt aufweist, durch den Licht im gewünschten Spektralbereich austritt. Auch in diesem Fall können die Transmission und Reflektion gleichzeitig gemessen werden. Bei der zweiten Ausführungsform der Erfindung erfolgt die Aufspaltung des Strahlengangs in die Teil-Strahlengänge nach der Wechselwirkung des Beleuchtungs-Lichts mit der Probe. In diesem Fall ist nur eine einzige Probenzelle zur Aufnahme der zu untersuchenden Probe vorgesehen. Vorteilhafterweise erfolgen in diesem Fall die Reflektions- und Transmissionsmessungen an einer einzigen Probe, insbesondere an einem gemeinsamen, beleuchteten Bereich der Probe. Dies kann für die Auswertung der Messergebnisse von Vorteil sein.

Gemäß einer weiteren Variante der Erfindung kann es von Vorteil sein, wenn die Transmissionsmessung vorgesehene Probenzelle im zugehörigen Teil-Strahlengang drehbar gelagert ist (Rotationszelle oder Rotationsküvette). Dies ermöglicht einen Messbetrieb, bei dem die Reflektions- und Transmissionsmessungen wiederholt durchgeführt werden, wobei zwischen jeweils zwei Messvorgängen eine Drehung der Probenzelle erfolgt. Bei der Drehung erfolgt eine Umordnung der partikulären Probe. Vorteilhafterweise kann damit eine Messreihe mit mehreren Reflektions- und Transmissionsmessungen aufgenommen werden, die eine statistische Nachbearbeitung der Messergebnisse ermöglicht. Alternativ können andere Zelltypen, wie z. B eine Schütt- oder eine Durchflussküvette vorgesehen sein.

Gemäß einer bevorzugten Variante der Erfindung enthält die Messeinrichtung eine Integrationskugel (Ulbricht-Kugel), mit der mindestens der für die Reflektionsmessung vorgesehene Detektor optisch verbunden ist. Vorteilhafterweise ermöglicht die Integrationskugel eine hochempfindliche Messung der Reflektion selbst bei schwach und/oder diffus streuenden Proben. Die Integrationskugel kann für eine direkte Beleuchtung der Probe (0°-Konfiguration) oder eine indirekte Beleuchtung der Probe (z. B. 90°-Konfiguration oder Konfiguration mit einem bezogen auf den Kugelmittelpunkt anderen Winkel zwischen der Eintrittsöffnung der Integrationskugel und der Position der Probe) ausgelegt sein.

Vorteilhafterweise kann mindestens ein physikalischer und/oder chemischer Parameter aus den gemessenen Werten der Transmission und Reflektion der mindestens einen Probe ermittelt werden. Ein physikalischer Parameter ist z. B. ein Feuchtegehalt einer Probe, während ein chemischer Parameter z. B. ein Substanzgehalt, z. B. Proteingehalt oder Stärkegehalt einer Probe ist. Bei der gleichzeitigen Vermessung von verschiedenartigen Teilproben kann mit der Ermittlung des mindestens einen physikalischen und/oder chemischen Parameters festgestellt werden, wie der Zustand einer Probe, z. B. einer Körnerprobe, nach deren Verarbeitung im Vergleich zu einem Ausgangszustand der Körnerprobe vor der Verarbeitung ist. Bei dieser Anwendung umfasst die erste Teilprobe z. B. eine partikuläre Probe und die zweite Teilprobe eine zusammengesetzte Probe mit festen und flüssigen Bestandteilen oder eine flüssige Probe. Erfindungsgemäß kann insbesondere ermittelt werden, wie hoch der Anteil einer gesuchten Substanz, z. B. Protein, Stärke, Alkohol nach der Verarbeitung ist und/oder ob er ggf. noch gesteigert werden kann.

Ein besonders vorteilhafter Aspekt der Erfindung besteht bei der Verwendung der oben beschriebenen Messeinrichtung oder des oben beschriebenen Verfahrens zur Analyse von Pflanzenproben, die zur Gewinnung von Kohlenwasserstoffen, insbesondere Kraftstoffen, wie z. B. Alkohol, vorgesehen sind. Die gleichzeitige Messung verschiedener spektroskopischer Größen ermöglicht eine schnelle und effektive Erfassung des Zustands einer Pflanzenprobe und eine Analyse des Prozess zur Gewinnung des Kohlenwasserstoffs.

Weitere Einzelheiten und Vorteile der Erfindung werden im Folgenden unter Bezug auf die beigefügten Zeichnungen beschrieben. Es zeigen:
- Figur 1: einen optischen Aufbau gemäß der ersten Ausführungsform der erfindungsgemäßen Messeinrichtung, und
- Figur 2: einen optischen Aufbau gemäß der zweiten Ausführungsform der erfindungsgemäßen Messeinrichtung.

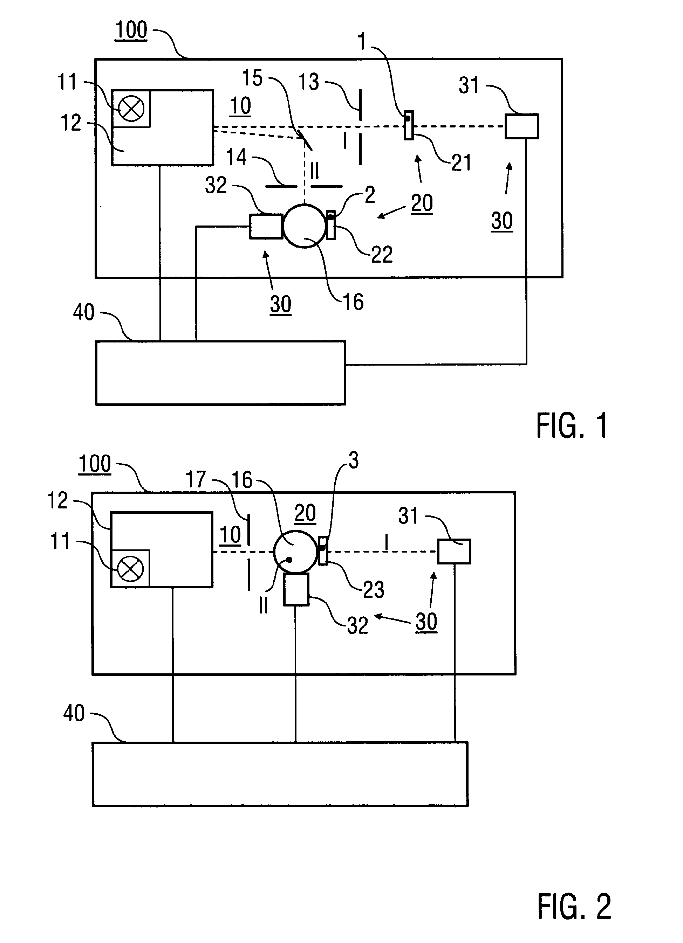

Figur 1 illustriert die erste Ausführungsform der erfindungsgemäßen Messeinrichtung 100 mit einer Beleuchtungseinrichtung 10, einer Probenhalterungseinrichtung 20, einer Detektoreinrichtung 30 und einer Steuer- und Auswertungseinrichtung 40. Die Beleuchtungseinrichtung 10 umfasst eine Lichtquelle 11 mit einem Monochromator 12, der zwei Austrittsspalte 13, 14 aufweist. Die Probenhalterungseinrichtung 20 umfasst zwei getrennte Probenzellen 21, 22. Die Probenzellen 21, 22 sind bspw. Quarzglasküvetten zur Aufnahme der Proben 1, 2 einer partikulären Probe, insbesondere einer Getreideprobe, oder einer flüssigen oder fließfähigen oder streichfesten Probe. Die Detektoreinrichtung 30 umfasst einen ersten Detektor 31, der zur Transmissionsmessung des durch die erste Probenzelle 21 hindurchtretenden Lichtes vorgesehen ist, und einen zweiten Detektor 32, der zur Reflektionsmessung des an der zweiten Probenzelle 22 reflektierten Lichts vorgesehen ist. Zur Sammlung des reflektierten Lichts ist eine Integrationskugel 16 vorgesehen, die zwei Öffnungen jeweils für die Beleuchtung der Probe 2 in der zweiten Probenzelle 22 und zur Lichtsammlung mit dem zweiten Detektor 32 aufweist. Die Steuerungs- und Auswertungseinrichtung 40 enthält einen Rechner, der insbesondere mit der Beleuchtungseinrichtung 10 und den Detektoren 31, 32 verbunden ist. Die Steuerungs- und Auswertungseinrichtung 40 ist ferner mit Peripheriegeräten (nicht dargestellt), wie z. B. einer Anzeigeeinrichtung, einem Drucker und/oder einem Datenspeicher verbunden. Vorteilhafterweise können in den Probenzellen verschiedenartige Teilproben angeordnet werden.

Der Monochromator 12 ist mit einem Strahlteiler, z. B. einem sog. statischen Strahlteiler 15 ausgestattet, mit dem ein Teil des Beleuchtungs-Licht, das aus dem Monochromator austritt, in den zweiten Teilstrahlengang II abgespalten wird. Der erste Teilstrahlengang I (z. B. mit der Hauptbeugungsordnung des Monochromatorgitters) verläuft vom Monochromator 12 über den ersten Austrittsspalt 13 durch die erste Probenzelle 21 zum ersten Detektor 31. In einem Messvorgang wird das Beleuchtungs-Licht des ersten Teil-Strahlengangs I durch einen vorbestimmten Spektralbereich durchgefahren, in dem die Transmissionsmessung erfolgen soll.

Der zweite Teil-Strahlengang II führt Beleuchtungs-Licht (z. B. mit der zweiten und/oder dritten Beugungsordnung des Monochromatorgitters) vom Monochromator 12 über den zweiten Austrittspalt 14 zur Integrationskugel 16, mit der eine indirekte Beleuchtung der Probe (z. B. 90°-Konfiguration) erfolgt. In dieser wird das Beleuchtungs-Licht gestreut, wobei die Probe 2 in der zweiten Probenzelle 22 beleuchtet wird. Das von der Probe 2 in die Integrationskugel 16 rückreflektierte wird mit dem zweiten Detektor 32 erfasst. Alternativ könnte die Integrationskugel 16 in z. B. 0°-Konfiguration angeordnet sein. In dem Messvorgang, in dem die Transmissionsmessung mit dem ersten Detektor 31 erfolgt, wird gleichzeitig die Wellenlänge des Beleuchtungs-Lichts auf dem zweiten Strahlengang II durch einen Spektralbereich gefahren, in dem die Reflektionsmessung erfolgen soll.

Der Monochromator 12 enthält zum Beispiel ein 600-Linien-Gitter (geritzt) mit einem optimalen Blaze-Winkel bei 720 nm. Es kann zum Beispiel vorgesehen sein, dass bei einem Wellenlängendurchlauf des Monochromators 12 im ersten Strahlengang I der Bereich 700 nm bis 1100 nm und im zweiten Strahlengang II der Bereich 1400 nm bis 2500 nm abgescannt wird.

Die mit den ersten und zweiten Detektoren 31, 32 erfassten Messsignale werden mit der Steuerungs- und Auswertungseinrichtung 40 verarbeitet. Die Steuerungs- und Auswertungseinrichtung 40 enthält insbesondere eine Recheneinheit, mit der die Messsignale der Detektoren 31, 32 mit vorbestimmten Auswertungsmodellen ausgewertet werden, wie dies an sich von herkömmlichen Techniken bekannt ist, z. B. um physikalische und/oder chemische Parameter aus den gemessenen Werten der Transmission und Reflektion der mindestens einen Probe zu ermitteln.

Figur 2 illustriert schematisch die zweite Ausführungsform der erfindungsgemäßen Messeinrichtung 100, bei der ebenfalls eine Beleuchtungseinrichtung 10, eine Probenhalterungseinrichtung 20, eine Detektoreinrichtung 30 und eine Steuerungs- und Auswertungseinrichtung 40 vorgesehen sind.

Die Beleuchtungseinrichtung 10 umfasst eine Lichtquelle 11, einen Monochromator 12 und einen einzigen Austrittsspalt 17. Das Beleuchtungs-Licht wird vom Monochromator 12 durch den Austrittsspalt 17 in die Integrationskugel 16 eingeführt, wo es auf die Probe 3 in der Probenzelle 23 fällt. Das Beleuchtungs-Licht fällt entlang eines geraden Strahlenganges von einer Einkoppelöffnung der Integrationskugel 16 direkt auf die gegenüber der Einkoppelöffnung an der Integrationskugel 16 angeordnete Probe 3 (0°-Konfiguration der Integrationskugel 16). Das von der Probenzelle 23 durchgelassene (transmittierte) Licht wird entlang dem ersten Teil-Strahlengang I zum ersten Detektor 31 übertragen, während das reflektierte Licht dem zweiten Teil-Strahlengang II (mehrfache Reflektion in der Integrationskugel 16) zum zweiten Detektor 32 folgt.

Die erfindungsgemäße Messeinrichtung 100 bietet insbesondere Vorteile bei Proben, die in einem ersten Spektralbereich besonders ausgeprägte spektrale Eigenschaften in Transmission und kaum spezifische spektrale Eigenschaften in Reflektion aufweisen, während sie in einem zweiten, vom ersten abweichenden Spektralbereich ausgeprägte spektrale Eigenschaften in Reflektion ohne spezifische spektrale Eigenschaften in Transmission aufweisen. Beispielsweise kann an Gerste optimal eine Reflektionsmessung im Spektralbereich von 380 nm bis 1.200 nm erfolgen, um für die Brauerei wichtige Proteine festzustellen, während im Spektralbereich von 850 nm bis 1.100 nm eine Transmissionsmessung optimal ist, um einen Wassergehalt zu erfassen.

Die in der vorstehenden Beschreibung, den Zeichnungen und den Ansprüchen offenbarten Merkmale der Erfindung können sowohl einzeln als auch in Kombination für die Verwirklichung der Erfindung in ihren verschiedenen Ausgestaltungen von Bedeutung sein.

## Patentansprüche

1. Messeinrichtung (100) zur spektroskopischen Untersuchung einer Probe (1, 2, 3), insbesondere einer partikulären Pflanzenprobe, einer zusammengesetzten Pflanzenprobe mit festen und flüssigen Bestandteilen oder einer flüssigen Pflanzenprobe, umfassend:
- eine Beleuchtungseinrichtung (10), die zur spektral aufgelösten Beleuchtung der Probe eingerichtet ist,
- eine Probenhalterungseinrichtung (20), und
- eine Detektoreinrichtung (30) mit einem ersten Detektor (31), der für eine Transmissionsmessung vorgesehen ist, und mit einem zweiten Detektor (32), der für eine Reflektionsmessung vorgesehen ist,
**dadurch gekennzeichnet, dass**
- die Beleuchtungseinrichtung (10) und die Detektoreinrichtung (30) so angeordnet sind, dass mit den ersten und zweiten Detektoren (31, 32) die Transmission und die Reflektion der Probe (1, 2, 3) in einem gemeinsamen Messvorgang messbar sind.

2. Messeinrichtung gemäß Anspruch 1, bei der
- die Beleuchtungseinrichtung (10) und die Detektoreinrichtung (30) so angeordnet sind, dass mit den ersten und zweiten Detektoren (31, 32) die Transmission und die Reflektion der Probe (1, 2, 3) gleichzeitig messbar sind.

3. Messeinrichtung gemäß Anspruch 1 oder 2, bei der
- die Beleuchtungseinrichtung (10) für eine Beleuchtung der Probe (1, 2) derart eingerichtet ist, dass die Transmission und die Reflektion in getrennten Wellenlängenbereichen messbar sind.

4. Messeinrichtung gemäß Anspruch 3, bei der
- die Beleuchtungseinrichtung (10) für die Beleuchtung der Probe (1, 2) derart eingerichtet ist, dass die Transmission im Wellenlängenbereich von 700 nm bis 1100 nm und die Reflektion im Wellenlängenbereich von 1400 nm bis 2500 nm messbar sind.

5. Messeinrichtung gemäß Anspruch 1, bei der
- die Beleuchtungseinrichtung (10) für eine Beleuchtung der Probe (3) derart eingerichtet ist, dass die Transmission und die Reflektion in überlappenden oder gleichen Wellenlängenbereichen messbar sind.

6. Messeinrichtung gemäß Anspruch 5, bei der
- die Beleuchtungseinrichtung (10) für die Beleuchtung der Probe (1, 2) derart eingerichtet ist, dass die Transmission im Wellenlängenbereich von 850 nm bis 1100 nm und die Reflektion im Wellenlängenbereich von 380 nm bis 1200 nm messbar sind.

7. Messeinrichtung gemäß mindestens einem der vorhergehenden Ansprüche, bei der die Beleuchtungseinrichtung (10) aufweist:
- zwei Austrittsspalte (13, 14), die zur Bereitstellung der Beleuchtung in den verschiedenen Wellenlängenbereichen angeordnet sind, oder
- einen einzigen Austrittsspalt (17), der zur Bereitstellung der Beleuchtung vorgesehen ist.

8. Messeinrichtung gemäß mindestens einem der vorhergehenden Ansprüche, bei der
- eine Integrationskugel (16) vorgesehen ist, mit der der zweite Detektor (32) und die Probenhalterungseinrichtung (20) verbunden sind.

9. Messeinrichtung gemäß mindestens einem der vorhergehenden Ansprüche, bei der die Probenhalterungseinrichtung (20) aufweist:
- zwei Probenzellen (21, 22), die zur Aufnahme von Teilproben (1, 2) der Probe für die Transmissionsmessung und für die Reflektionsmessung vorgesehen sind, oder
- eine einzige Probenzelle (23), die zur Aufnahme der Probe (3) vorgesehen ist, wobei
- die Probenhalterungseinrichtung (20) insbesondere zur Aufnahme einer partikulären Pflanzenprobe, einer zusammengesetzten Pflanzenprobe mit festen und flüssigen Bestandteilen oder einer flüssigen Pflanzenprobe konfiguriert ist.

10. Messeinrichtung gemäß Anspruch 9, bei der
- die Probenzelle (21), die für die Transmissionsmessung vorgesehen ist, im Strahlengang von der Beleuchtungseinrichtung (10) zum ersten Detektor (31) drehbar gelagert ist.

11. Verfahren zur spektroskopischen Untersuchung mindestens einer Probe (1, 2, 3), insbesondere mindestens einer partikulären Pflanzenprobe, mindestens einer zusammengesetzten Pflanzenprobe mit festen und flüssigen Bestandteilen oder mindestens einer flüssigen Pflanzenprobe mit den Schritten:
- spektral aufgelöste Beleuchtung der mindestens einen Probe mit einer Beleuchtungseinrichtung (10), und
- Messung an der mindestens einen Probe mit einer Transmissionsmessung und einer Reflektionsmessung, wobei eine Detektoreinrichtung (30) verwendet wird, die einen ersten Detektor (31) für die Transmissionsmessung und einen zweiten Detektor (32) für die Reflektionsmessung aufweist,
**dadurch gekennzeichnet, dass**
- mit den ersten und zweiten Detektoren (31, 32) die Transmission und die Reflektion der mindestens einen Probe (1, 2, 3) gemeinsam gemessen werden.

12. Verfahren gemäß Anspruch 11, bei dem
- die Transmission und die Reflektion in getrennten Wellenlängenbereichen aufeinander folgend oder gleichzeitig gemessen werden.

13. Verfahren gemäß Anspruch 12, bei dem
- die Transmission im Wellenlängenbereich von 700 nm bis 1100 nm und die Reflektion im Wellenlängenbereich von 1400 nm bis 2500 nm gemessen werden.

14. Verfahren gemäß Anspruch 11, bei dem
- die Transmission und die Reflektion in überlappenden oder gleichen Wellenlängenbereichen gemessen werden.

15. Verfahren gemäß Anspruch 14, bei dem
- die Transmission im Wellenlängenbereich von 850 nm bis 1100 nm und die Reflektion im Wellenlängenbereich von 380 nm bis 1200 nm gemessen werden.

16. Verfahren gemäß mindestens einem der Ansprüche 11 bis 15, bei dem die Beleuchtungseinrichtung (10) aufweist:
- zwei Austrittsspalte (14, 14), durch welche die Beleuchtung der mindestens einen Probe erfolgt, oder
- einen einzigen Austrittsspalt (15), durch den die Beleuchtung der mindestens einen Probe erfolgt.

17. Verfahren gemäß mindestens einem der Ansprüche 11 bis 16, bei dem
- die Reflektionsmessung unter Verwendung einer Integrationskugel (16) erfolgt.

18. Verfahren gemäß mindestens einem der Ansprüche 11 bis 17, bei dem die mindestens eine Probe mindestens eine partikuläre Pflanzenprobe, mindestens eine zusammengesetzte Pflanzenprobe mit festen und flüssigen Bestandteilen oder mindestens eine flüssige Pflanzenprobe umfasst.

19. Verfahren gemäß mindestens einem der Ansprüche 11 bis 18, mit dem Schritt
- Bereitstellung der mindestens einen Probe in einer Probenhalterungseinrichtung (20), die zwei Probenzellen (21, 22) zur Aufnahme von Teilproben (1, 2) der mindestens einen Probe für die Transmissionsmessung und für die Reflektionsmessung oder eine einzige Probenzelle (23) zur Aufnahme der mindestens einen Probe (3) umfasst.

20. Verfahren gemäß Anspruch 19, bei dem
- die Teilproben (1, 2) gleichartig sind und jeweils eine partikuläre Pflanzenprobe, eine zusammengesetzte Pflanzenprobe mit festen und flüssigen Bestandteilen oder eine flüssige Pflanzenprobe umfassen, oder
- die Teilproben (1, 2) verschiedenartig sind und eine erste Teilprobe (1 oder 2) eine partikuläre Pflanzenprobe, eine zusammengesetzte Pflanzenprobe mit festen und flüssigen Bestandteilen oder eine flüssige Pflanzenprobe umfasst und eine zweite Teilprobe (2 oder 1) eine von der ersten Teilprobe verschiedenartige partikuläre Pflanzenprobe, zusammengesetzte Pflanzenprobe mit festen und flüssigen Bestandteilen oder flüssige Pflanzenprobe umfasst.

21. Verfahren gemäß mindestens einem der Ansprüche 19 bis 20, mit dem Schritt
- Drehung der Probenzelle (21), die für die Transmissionsmessung vorgesehen ist, im Strahlengang von der Beleuchtungseinrichtung (10) zum ersten Detektor (31).

22. Verfahren gemäß mindestens einem der Ansprüche 11 bis 21, mit dem Schritt:
- Ermittlung mindestens eines physikalischen und/oder chemischen Parameters, insbesondere eines Substanzgehaltes, der mindestens einen Probe (1, 2, 3) aus den gemessenen Werten der Transmission und Reflektion der mindestens einen Probe (1, 2, 3).

23. Verwendung einer Messeinrichtung oder eines Verfahrens gemäß einem der vorhergehenden Ansprüche zur Analyse von Pflanzenproben, die zur Gewinnung von Kohlenwasserstoffen, insbesondere Alkohol, vorgesehen sind.
